# EUROPÄISCHE PATENTSCHRIFT

(11) **EP 2 428 121 B1**
(45) Veröffentlichungstag und Bekanntmachung des Hinweises auf die Patenterteilung: **18.02.2015**
(21) Anmeldenummer: 11180660.0
(22) Anmeldetag: 09.09.2011
(51) Int. Cl.: A23G 3/00, A23G 3/02, A23G 3/04, A23G 3/32, A23G 3/34

(54) **Verfahren und Vorrichtung zur energiesparenden Herstellung von Süßwarenmassen**
Method and device for energy-efficient production of confectionary masses
Procédé et dispositif destinés à la fabrication à économie d'énergie de masses de confiserie

(30) Priorität: 14.09.2010 DE 102010037516
(43) Veröffentlichungstag der Anmeldung: 14.03.2012
(73) Patentinhaber: CHOCOTECH GmbH, 38855 Wernigerode (DE)
(72) Erfinder: Philipp, Sieghart, 26770 Taulignan (FR)
(74) Vertreter: Rehberg, Bernhard Frank

(56) Entgegenhaltungen:
- EP-A1- 0 418 106
- WO-A1-2009/124799
- AT-B- 193 238
- DE-A1- 2 933 053
- DE-C- 906 886
- DE-C1- 10 217 984
- US-A- 3 983 862
- US-B1- 6 685 981

## Beschreibung

### TECHNISCHES GEBIET DER ERFINDUNG

Die Erfindung betrifft ein Verfahren und eine Vorrichtung zum satzweisen Herstellen einer Zucker oder einen Zuckerersatzstoff enthaltenden Slurry für Süßwaren.

Bei den Süßwaren handelt es sich insbesondere um Bonbons, Weichkaramellen, Hartkaramellen, Toffees, Fondant, usw. Für deren Herstellung wird als Ausgangsmasse eine Mischung aus mindestens einer Flüssigkeit und mindestens einem Trockenstoff angesetzt und anschließend so gemischt, dass eine Suspension entsteht, die so genannte Slurry. Beim Herstellen von Hartkaramellen handelt es sich bei der Flüssigkeit um Glucosesirup und bei dem Feststoff um Zucker. Bei zuckerfreien Süßwaren handelt es sich bei der Flüssigkeit um Wasser und bei dem Feststoff um einen Zuckerersatzstoff. Bei Weichkaramellen werden üblicherweise weitere Flüssigkeiten verwendet, wie z. B. Milch, Fett, Sorbitol, usw.

### STAND DER TECHNIK

Ein Verfahren und eine Vorrichtung zum satzweisen Herstellen einer Zucker enthaltenden Slurry für Süßwaren sind aus der deutschen Patentanmeldung DE 29 33 053 A1 bekannt. Die Vorrichtung weist einen Wiege- und Mischbehälter auf, in dem zunächst als Feststoff Kristallzucker und anschließend als Flüssigkeit Glucosesirup und Wasser zugegeben werden. Die hierbei entstehende Mischung wird mittels eines Rührers vorgemischt. Die Mischung wird dann durch ein Absperrventil in einen separaten Mischbehälter abgelassen, in dem die Mischung mittels eines weiteren Rührers zum Erzeugen einer Slurry fertig gemischt wird. Dabei können 100 Gewichtsanteile Zucker, 100 Gewichtsanteile Glucosesirup und 10 Gewichtsanteile Wasser verwendet werden. Nach Erkenntnissen der Anmelderin besitzt verarbeitbarer Glucosesirup einen Wasseranteil von etwa 20 Prozent, so dass die Slurry einen Trockensubstanzanteil von etwa 85 % besitzt.

Ein Verfahren zum satzweisen Herstellen einer Zucker enthaltenden Slurry für Fondantmassen ist aus der deutschen Patentanmeldung DE 25 11 846 bekannt. Bei dem Verfahren werden 100 kg Zucker, 20 kg Glucosesirup mit einem Wasseranteil von 20 Gewichtsprozent und 20 kg Wasser vermischt und gelöst, während sie erwärmt werden. Die Slurry besitzt demnach einen Trockensubstanzanteil von etwa 83 %.

Ein Verfahren und eine Vorrichtung zum kontinuierlichen Herstellen einer Zucker enthaltenden Slurry für Süßwaren sind aus der PCT-Anmeldung WO 2009/124799 A1 bekannt. Das Verfahren und die Vorrichtung arbeiten ganz bewusst kontinuierlich, d. h. gerade nicht satzweise. Für die Herstellung der Slurry werden kontinuierlich mindestens eine Flüssigkeit und mindestens ein Feststoff in einen Mischbehälter zugeführt. Der Trockensubstanzanteil der Slurry kann dabei zwischen 80 und 90 % betragen.

Aus der europäischen Patentanmeldung EP 0 418 106 A1 sind ein Verfahren und eine Vorrichtung zur kontinuierlichen Herstellung von Süßwarenmassen bekannt, wobei kein Wasser eingesetzt und keine Slurry hergestellt wird.

Aus dem US-amerikanischen Patent US 3,983,862 ist ein weiteres kontinuierliches Verfahren zur Herstellung einer Süßwarenmasse bekannt.

Weitere Verfahren und Vorrichtungen zur Verarbeitung von Süßwarenmassen sind aus den deutschen Patenten DE 10 2004 049 269 B3**,** DE 699 07 165 T2**,** DE 102 17 984 C5**,** DE 906 886 B, der deutschen Patentanmeldung DE 21 41 931 A, dem österreichischen Patent AT 193 238 B sowie dem US-Patent US 6,953,598 B2 bekannt.

### AUFGABE DER ERFINDUNG

Der Erfindung liegt die Aufgabe zugrunde, ein Verfahren und eine Vorrichtung zum satzweisen Herstellen einer Zucker oder einen Zuckerersatzstoff enthaltenden Slurry für Süßwaren bereit zustellen, die Rezeptumstellungen flexibel zulassen und gleichzeitig den zur Herstellung der Süßwarenmasse benötigten Energiebedarf reduzieren.

### LÖSUNG

Die Aufgabe der Erfindung wird erfindungsgemäß mit den Merkmalen der unabhängigen Patentansprüche gelöst.

### BESCHREIBUNG DER ERFINDUNG

Die Erfindung betrifft ein Verfahren zum satzweisen Herstellen einer Zucker oder einen Zuckerersatzstoff enthaltenden Slurry für Süßwaren. Eine Flüssigkeit wird satzweise gewichtsgenau in einen Wiege- und Mischbehälter eindosiert. Zucker oder ein Zuckerersatzstoff wird als Trockenstoff in den Wiege- und Mischbehälter eindosiert. Die Flüssigkeit und der Trockenstoff werden so eindosiert und bilden dabei eine Mischung (oder ein Gemisch), welche so gemischt bzw. gerührt wird, dass eine Slurry mit einem Trockensubstanzanteil von mindestens 85 % entsteht. Die Mischung wird durch Beheizen des Wiege- und Mischbehälters während des Eindosierens des Trockenstoffs derart erwärmt, dass die Slurry eine Temperatur von mindestens 70 °C besitzt.

Die Erfindung betrifft weiterhin eine Vorrichtung zum satzweisen Herstellen einer Zucker oder einen Zuckerersatzstoff enthaltenden Slurry für Süßwaren. Die Vorrichtung weist einen Wiege- und Mischbehälter mit einer Gewichtsregeleinrichtung zum satzweisen gewichtsgenauen Eindosieren einer Flüssigkeit und von Zucker oder eines Zuckerersatzstoffs als Trockenstoff zum Erzeugen einer Mischung auf. Die Gewichtsregeleinrichtung ist so geregelt, dass die Flüssigkeit und der Trockenstoff so eindosiert werden und die Mischung so gemischt wird, dass eine Slurry mit einem Trockensubstanzanteil von mindestens 85 % entsteht. Die Vorrichtung weist eine an dem Wiege- und Mischbehälter angeordnete Heizeinrichtung mit einer Temperaturregeleinrichtung mit einem Sensor zum Erfassen der Temperatur in dem Wiege- und Mischbehälter auf, die derart zum Erwärmen des Wiege- und Mischbehälters ausgebildet ist, dass die Slurry eine Temperatur von mindestens 70 °C besitzt.

Bei den Süßwaren handelt es sich insbesondere um Bonbons, Weichkaramellen, Hartkaramellen, Toffees, Fondant, usw. Die neue Ausgangsmasse für die Herstellung von Hartkaramell besteht insbesondere aus etwa 50 Gewichtsprozent Zucker oder Zuckerersatzstoffen und etwa 50 Gewichtsprozent Glucosesirup. Der Glucosesirup enthält dabei einen Wasseranteil von etwa 20 Gewichtsprozent. Die fertige Slurry besitzt somit einen Trockensubstanzanteil von etwa 90 %. Die neue Ausgangsmasse für die Herstellung von Fondant besteht beispielsweise aus etwa 100 kg Zucker, etwa 20 kg Glucosesirup und etwa 9 kg Wasser. Der Glucosesirup enthält dabei einen Wasseranteil von 20 Gewichtsprozent. Diese fertige Slurry besitzt somit einen Trockensubstanzanteil von etwa 90 %.

Bei einer Slurry handelt es sich um eine Suspension aus einer Flüssigkeit und darin enthaltenen Feststoffen, wobei die Feststoffe noch ungelöst sind. Für die Herstellung der Slurry wird als Ausgangsmasse eine Mischung aus mindestens einer Flüssigkeit und mindestens einem Trockenstoff angesetzt und anschließend so gemischt, dass die Slurry entsteht. Nach dem Lösen der in der Slurry enthaltenen Feststoffe - meist durch Druckauflösung - spricht man dann von einer Lösung. Diese Lösung wird dann noch zum Reduzieren des Wasseranteils gekocht und ggf. weiter behandelt. Die daraus entstehende Substanz bildet dann die Süßwarenmasse bzw. einen Teil der herzustellenden Süßwaren.

Mit der Erfindung werden die Vorteile einer satzweisen im Gegensatz zu einer kontinuierlichen Herstellung der Slurry genutzt. Diese Vorteile bestehen insbesondere darin, dass Rezepturumstellungen und beispielsweise der Wechsel der Ausgangsstoffe sehr flexibel durchgeführt werden können. Weiterhin können mehrere Anlagen zur Weiterverarbeitung der Slurry unter Einsatz einer zentralen Mischanlage vergleichsweise einfach mit unterschiedlichen Rezepturen versorgt werden. Diese Flexibilität wird nun mit dem Vorteil eines reduzierten Energiebedarfs bei der Süßwarenherstellung kombiniert. Die Reduzierung des Energiebedarfs wird dadurch erreicht, dass die Mischung aus mindestens einem Trockenstoff und mindestens einer Flüssigkeit so angesetzt wird, dass die hieraus durch Mischen entstehende Slurry einen hohen Trockensubstanzanteil von mindestens 85 % - insbesondere von 90 % oder mehr - erhält, und später entsprechend weniger Energie zum Reduzieren des Wasseranteils durch Verdampfen aufgewendet werden muss.

Bei einem derartig geringen Flüssigkeitsanteil von 15 % bzw. 10 % oder weniger steigt die Viskosität der Slurry überproportional an, was einen negativen Einfluss auf die Weiterverarbeitbarkeit und insbesondere die Mischfähigkeit und Pumpfähigkeit der Slurry besitzt. Wenn die Viskosität der Slurry zu groß ist, kann diese nicht mehr in der gewünschten Weise durch die entsprechenden Rohrleitungen für die Weiterverarbeitung gepumpt werden. Erfindungsgemäß wird nun also die Mischung derart erwärmt, dass die Slurry eine Temperatur von mindestens 70 °C und insbesondere zwischen 80 und 100 °C erhält. Hierdurch ergibt sich die gewünschte niedrige Viskosität bei dem hohen Trockensubstanzanteil von mindestens 85 %. Die Weiterverarbeitbarkeit und Pumpbarkeit der Slurry bleibt erhalten und der Energiebedarf bei der Weiterverarbeitung wird reduziert, da weniger Wasser aus der Slurry ausgedampft werden muss. Die Energieeinsparung ist dabei erheblich, da die Verdampfungswärme von Wasser bei Atmosphärendruck etwa 539 kcal/kg beträgt und somit den nur vergleichweise gering erhöhten Energiebedarf bei der Herstellung der Slurry durch das Erwärmen deutlich überwiegt. Gegenüber dem Stand der Technik ergibt sich somit eine Energieeinsparung von etwa 30 bis 50 %.

Wichtig ist also, dass die Slurry eine niedrige Viskosität trotz des hohen Trockensubstanzanteils besitzt, was durch die entsprechende Erwärmung erreicht wird. Dabei gibt es verschiedene Möglichkeiten der Erwärmung der Ausgangsstoffe, der Mischung und/oder der fertigen Slurry. Von einer Mischung wird in dieser Anmeldung dabei davon gesprochen, wenn die Ausgangsstoffe mindestens teilweise zusammengegeben wurden, es sich jedoch noch nicht um die (erst durch das weitere Mischen entstehende) fertige Slurry handelt. Wenn die Ausgangsstoffe - d. h. die mindestens eine Flüssigkeit und der mindestens eine Trockenstoff - erwärmt werden, kann dies bereits außerhalb des Wiege- und Mischbehälters erfolgen und gegebenenfalls auch noch in dem Sinne innerhalb des Wiege- und Mischbehälters fortgesetzt werden, als der zuerst eindosierte Ausgangsstoff betroffen ist. Die Mischung und/oder die Slurry werden in dem Wiege- und Mischbehälter erwärmt.

Die neue Heizeinrichtung mit der Temperaturregeleinrichtung erwärmt also den Wiege- und Mischbehälter im Sinne einer definierten Erwärmung der darin enthaltenen Masse und nicht nur im Sinne einer vergleichsweise schwachen und undefinierten Beheizung der Gehäusewandung zum Verhindern von Anhafteffekten der Masse an der Innenseite der Gehäusewandung, wie dies im Stand der Technik bekannt ist.

Der Wiege- und Mischbehälter ist vorzugsweise als genau ein Behälter ausgebildet, in dem beide Funktionen des Wiegens bzw. Eindosierens und des Mischens zum Erhalt der Slurry unter Wärmezufuhr erbracht werden. Es ist aber auch möglich, die Funktionen des Wiege- und Mischbehälters auf mehrere getrennte Behälter zu verteilen, wobei dann in einem ersten Behälter das Wiegen bzw. Eindosieren unter Mischen und Erwärmen stattfindet, das Mischen jedoch nicht bis zum Erreichen der fertigen Slurry durchgeführt wird. Das Fertigmischen unter Wärmezufuhr zum Erreichen der fertigen Slurry findet dann in einem stromabwärts angeordneten zweiten Behälter statt, in den die Mischung aus dem ersten Behälter abgelassen wird.

Der Wiege- und Mischbehälter wird während des Eindosierens des Trockenstoffs so beheizt, dass die Temperatur der Mischung annähernd konstant bei mindestens 70 °C liegt. Hierdurch wird sichergestellt, dass die in dem Wiege- und Mischbehälter enthaltene Flüssigkeit eine ausreichend hohe Temperatur besitzt, um den hinzu gegebenen Trockenstoff aufnehmen zu können. Bei der Vorrichtung wird dies mittels eines Sensors der Temperaturregeleinrichtung erreicht, der die Temperatur in dem Wiege- und Mischbehälter erfasst und die Heizeinrichtung entsprechend regelt.

Der Durchsatz des Trockenstoffs kann so geregelt werden, dass die Temperatur der Mischung annähernd konstant bei mindestens 70 °C liegt. Bei der Vorrichtung wird dies mittels der Temperaturregeleinrichtung erreicht. Je nach Temperatur der bereits im Wiege- und Mischbehälter enthaltenen Mischung und des Trockenstoffs wird dieser also mehr oder weniger schnell zu der Mischung hinzugegeben, um letztendlich das gewünschte Mischungsverhältnis der Ausgangsstoffe zu erreichen, ohne die jeweilige Viskositätsobergrenze zu überschreiten.

Gemäß einem weiteren Aspekt der Erfindung - der auch unabhängig von den bisher erläuterten Aspekten umsetzbar ist - kann bei einem späteren Verfahrensschritt der Energiebedarf weiter gesenkt werden. Für die Weiterverarbeitung der Slurry werden die in der Slurry vorhandenen Feststoffe zum Erzeugen einer Lösung gelöst. Vorzugsweise handelt es sich dabei um eine Druckauflösung, d. h. die Slurry wird unter Überdruck gesetzt und die Masse unterhalb der Siedetemperatur zum Lösen der Feststoffe erwärmt und dabei gerührt. Anschließend wird die Lösung zur Erhöhung des Trockensubstanzanteils unter Abgabe von Brüden gekocht. Die Brüden als Primärmedium werden in einem Wärmetauscher unter Erwärmung eines Sekundärmediums kondensiert. Die kondensierten Brüden und/oder das erwärmte Sekundärmedium werden aufgefangen. Bei der erfindungsgemäßen Vorrichtung ist dabei zum Lösen eine Lösevorrichtung und insbesondere eine Drucklösevorrichtung, zum Kochen der Lösung ein Kocher, zum Kondensieren der Brüden ein Wärmetauscher und zum Auffangen der kondensierten Brüden eine Vorrichtung bzw. Behälter vorhanden. Es ist ebenfalls möglich, dass der Wiege- und Mischbehälter gleichzeitig als Drucklösevorrichtung bzw. -behälter ausgebildet ist und somit im Wiege- und Mischbehälter auch das Lösen der in der Slurry vorhandenen Feststoffe erfolgt.

Durch den Wärmetauscher kann somit die in den Brüden enthaltene Wärmeenergie noch sinnvoll weiter genutzt werden, so dass der Energiebedarf des Gesamtsystems zusätzlich reduziert wird. Die Brüden werden also nicht wie bisher üblich über den Schornstein in die Atmosphäre geleitet, sondern in einem Wärmetauscher kondensiert. In dem Wärmetauscher wird als Sekundärmedium vorzugsweise Kaltwasser verwendet, welches den zu kondensierenden Brüden als Primärmedium somit Wärmeenergie entzieht und sich dabei zu Warmwasser aufheizt. Dieses saubere Warmwasser kann z. B. in einem Vorratsbehälter einer CIP-Anlage (CIP = "Cleaning In Place") gespeichert werden. Die kondensierten Brüden, die Partikel der die Lösung bildenden Bestandteile enthalten und somit leicht verunreinigt sind, können ebenfalls in der CIP-Anlage verwendet werden. Aufgrund der leichten Verunreinigung bietet sich ein Einsatz für die Vorreinigung an, während das saubere erwärmte Sekundärmedium z. B. zum Klarspülen eingesetzt werden kann.

Durch das Kochen, welches gegebenenfalls auch in mehreren Schritten im Sinne eines Vorkochens und eines separaten Fertigkochens realisiert werden kann, wird der Trockensubstanzanteil der aus der Slurry entstandenen Lösung weiter reduziert, wobei der gewünschte Trockensubstanzanteil je nach Produkt bis zu etwa 99 % betragen kann.

Mit dem neuen Verfahren und der neuen Vorrichtung können sowohl zuckerhaltige als auch mindestens einen Zuckerersatzstoff enthaltende Slurries für Süßwaren hergestellt werden. Als Zuckerersatzstoff wird vorzugsweise ein Trockenstoff eingesetzt, z. B. Isomalt.

Das Druckauflösen und das Kochen können auch in einer gemeinsamen Vorrichtung durchgeführt werden. Dabei weist die kombinierte Vorrichtung einen Löseteil und einen Kochteil auf, zwischen denen ein einstellbarer Strömungswiderstand vorhanden ist, um den notwendigen Systemdruck im Löseteil aufbauen zu können.

Durch den reduzierten Wasseranteil der Slurry verringert sich nicht nur die erforderliche Wärmeenergie für das spätere Ausdampfen des Wassers, sondern auch die erforderliche Wärmeaustauschfläche. Die verwendeten Kocher können daher kleiner dimensioniert werden bzw. der Durchsatz bereits vorhandener Kocheinrichtungen kann erhöht werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkver bindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Flüssigkeit die Rede ist, ist dies so zu verstehen, dass genau eine Flüssigkeit, zwei oder mehr Flüssigkeiten oder auch eine Flüssigkeitsmischung vorhanden sind. Wenn hingegen nur die genaue Anzahl eines Merkmals angegeben werden soll, findet das Adjektiv "genau" vor dem jeweiligen Merkmal Verwendung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste beispielhafte Ausführungsform der neuen Vorrichtung zum satzweisen Herstellen einer Slurry.
- **Fig. 2**: zeigt eine zweite beispielhafte Ausführungsform der neuen Vorrichtung zum satzweisen Herstellen einer Slurry.
- **Fig. 3**: zeigt eine dritte beispielhafte Ausführungsform der neuen Vorrichtung zum satzweisen Herstellen einer Slurry und zum Weiterverarbeiten der Slurry.
- **Fig. 4**: zeigt eine vierte beispielhafte Ausführungsform der neuen Vorrichtung zum satzweisen Herstellen einer Slurry und zum Weiterverarbeiten der Slurry.
- **Fig. 5**: zeigt eine fünfte beispielhafte Ausführungsform der neuen Vorrichtung zum satzweisen Herstellen einer Slurry und zum Weiterverarbeiten der Slurry.

- **Fig. 6**: zeigt eine sechste beispielhafte Ausführungsform der neuen Vorrichtung zum satzweisen Herstellen einer Slurry und zum Weiterverarbeiten der Slurry.

### FIGURENBESCHREIBUNG

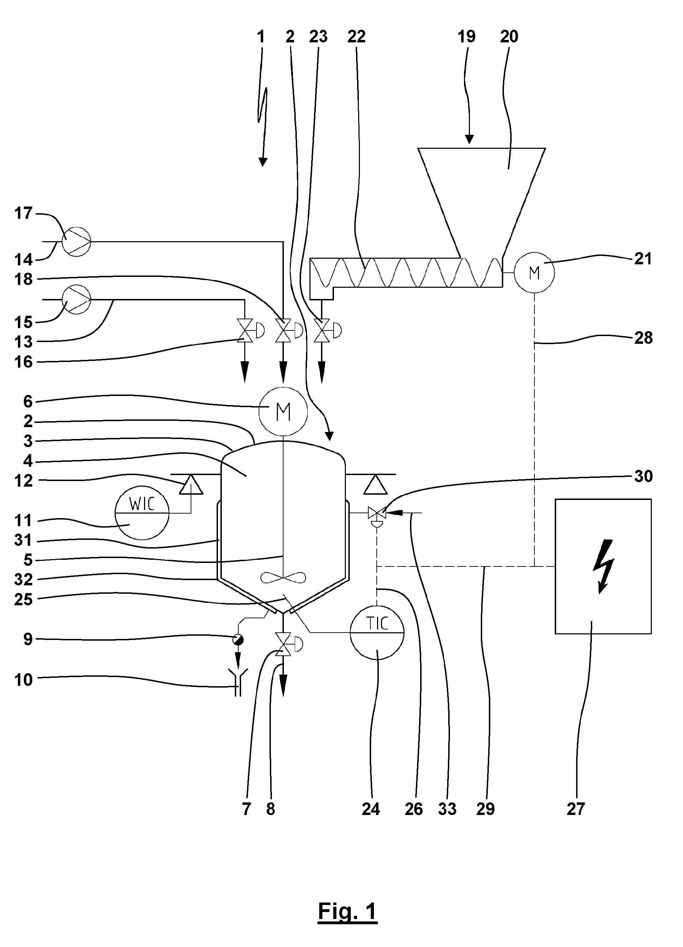

**Fig. 1** zeigt eine erste beispielhafte Ausführungsform einer neuen Vorrichtung 1 zum satzweisen Herstellen einer Zucker oder einen Zuckerersatzstoff enthaltenden Slurry als Ausgangsmasse für die Herstellung von Süßwaren.

Die Vorrichtung 1 weist einen Wiege- und Mischbehälter 2 mit einem Gehäuse 3, einem Innenraum 4 und einem in dem Innenraum 4 angeordneten Mischer 5 auf. Der Mischer 5 wird mittels eines Motors 6 rotierend angetrieben. Anstelle des Mischers 5 könnte auch beispielsweise ein anderes Rührwerk oder auch ein Schlagwerk vorhanden sein. Im unteren Bereich des Wiege- und Mischbehälters 2 ist der Innenraum 4 über ein Ventil 7 mit einer Leitung 8 verbunden, wobei das Ventil 7 in seiner geschlossenen Stellung das Heraustreten einer im Innenraum 4 enthaltenen Masse aus dem Wiege- und Mischbehälter 2 verhindert und ein Ablassen der Masse in seiner geöffneten Stellung gestattet.

Der Wiege- und Mischbehälter 2 weist weiterhin eine Gewichtsregeleinrichtung 11 auf, die als WIC-Regeleinrichtung (WIC = "Weight Indication Control") ausgebildet ist. Die Gewichtsregeleinrichtung 11 weist eine Aufhängung 12 mit Wiegezellen und Messaufnehmern auf, so dass das Gewicht des Wiege- und Mischbehälters 2 bzw. der in diesem enthaltenen Masse bestimmt wird.

Für die Zuführung einer ersten Flüssigkeit ist eine Leitung 13 und für die Zuführung einer zweiten Flüssigkeit eine Leitung 14 vorgesehen. In der Leitung 13 sind dabei eine Pumpe 15 und ein Ventil 16 vorhanden. In der Leitung 14 sind eine Pumpe 17 und ein Ventil 18 angeordnet. Bei der ersten Flüssigkeit kann es sich beispielsweise um Wasser und insbesondere solches mit einer Temperatur von etwa zwischen 10 °C und 20 °C handeln. Bei der zweiten Flüssigkeit kann es sich um Glucosesirup insbesondere einer Temperatur von etwa zwischen 50 °C und 60 °C handeln.

Weiterhin ist eine Vorrichtung 19 zum Zuführen eines Trockenstoffs vorgesehen. Bei dem Trockenstoff kann es sich insbesondere um Zucker oder einen oder mehrere Zuckerersatzstoffe handeln. Die Vorrichtung 19 weist einen Vorratsbehälter 20 auf, der in seinem unteren Bereich eine mittels eines Motors 21 angetriebene Förderschnecke 22 aufweist. Weiterhin ist ein Ventil 23 vorgesehen, über welches die Vorrichtung 19 abgesperrt bzw. zur Abgabe des Feststoffs geöffnet werden kann.

Der Wiege- und Mischbehälter 2 weist weiterhin eine Temperaturregeleinrichtung 24 auf. Bei dieser Temperaturregeleinrichtung 24 handelt es sich insbesondere um eine TIC-Regeleinrichtung (TIC = "Temperature Indication Control"). Die Temperaturregeleinrichtung 24 weist einen Sensor 25 auf, der zum Erfassen der Temperatur im Innenraum 4 des Wiege- und Mischbehälters 2 dient. Die Temperaturregeleinrichtung 24 ist über eine elektrische Leitung 26 mit einer Steuereinheit 27 verbunden. Die Steuereinheit 27 ist weiterhin über eine elektrische Leitung 28 mit dem Motor 21 und über eine elektrische Leitung 29 mit einem Ventil 30 verbunden.

Das Ventil 30 ist einer Heizeinrichtung 31 des Wiege- und Mischbehälters 2 zugeordnet. Die Heizeinrichtung 31 weist eine Doppelwand 32 derart auf, dass über eine Leitung 33 und das geöffnete Ventil 30 heißer Dampf in die Doppelwand 32 der Heizeinrichtung 31 eintreten und somit das Gehäuse 3 beheizen kann. Weiterhin ist in diesem Bereich ein Kondensatableiter 9 vorgesehen, über den das Kondensat in eine Drainage 10 abgeführt werden kann.

Der **Betrieb** der Vorrichtung 1 und das Verfahren laufen wie folgt ab:
Die Vorrichtung 1 dient zum Herstellen einer Slurry als Ausgangsstoff für die Herstellung von Süßwaren. Die Herstellung geschieht dabei satzweise, d. h. es wird stets eine Portion der Slurry hergestellt und anschließend abgeführt, um die nächste Portion derselben oder einer anderen Rezeptur herzustellen.

Zunächst wird das Ventil 16 geöffnet und die erste Flüssigkeit mittels der Pumpe 15 durch die Leitung 13 in den Innenraum 4 des Wiege- und Mischbehälters 2 gepumpt. Bei dieser Flüssigkeit handelt es sich insbesondere um Frischwasser. Die je nach der verwendeten Rezeptur gewünschte Masse wird über die Gewichtsregeleinrichtung 11 und deren Aufhängung 12 mit Wiegezellen und Messaufnehmern festgestellt, so dass das Ventil 16 automatisch geschlossen wird, sobald die erforderliche Masse der ersten Flüssigkeit im Wiege- und Mischbehälter 2 enthalten ist.

Anschließend (oder auch vorher) wird die zweite Flüssigkeit in vergleichbarer Weise mittels der Pumpe 17 durch die Leitung 14 und das dafür geöffnete Ventil 18 in den Innenraum 4 des Wiege- und Mischbehälters 2 gepumpt. Auch die Masse dieser Flüssigkeit wird gewichtsgenau über die Gewichtsregeleinrichtung 11 eindosiert. Bereits beim Eindosieren der zweiten Flüssigkeit wird der Mischer 5 vorzugsweise betrieben, so dass eine Mischung der ersten und zweiten Flüssigkeit entsteht.

Anschließend (oder auch vorher) wird der Feststoff über das geöffnete Ventil 23 in den Innenraum 4 des Wiege- und Mischbehälters 2 gewichtsgenau eindosiert. Die Zuführung erfolgt dabei über die Förderschnecke 22, die mittels des Motors 21 rotierend angetrieben wird und damit den Feststoff aus dem Vorratsbehälter 20 herausbefördert. Wenn nun die bezüglich ihrer Bestandteile fertige Rezeptur in dem Wiege- und Mischbehälter 2 enthalten ist, beginnt die Mischphase bzw. die Mischphase wird fortgesetzt, so dass die Ausgangsstoffe zu einer Suspension vermischt werden, die als Slurry bezeichnet wird.

Mittels der Heizeinrichtung 31, durch die heißer Wasserdampf in die Doppelwand 32 eingebracht wird, werden der Wiege- und Mischbehälter 2 bzw. die in ihm enthaltenen Ausgangsstoffe, die Mischung bzw. die Slurry erwärmt. Die Erwärmung bewirkt, dass trotz des hohen Trockensubstanzanteils der Slurry von mindestens 85 % - insbesondere von 90 % oder mehr - die Slurry eine hinreichend niedrige Viskosität besitzt, so dass die Mischfähigkeit und Pumpfähigkeit der Slurry erhalten bleibt. Das beim Heizen entstehende Kondensat wird über den Kondensatableiter 9 in die Drainage 10 abgeführt.

Die Vorrichtung 1 weist neben der Gewichtsregeleinrichtung 11 eine Temperaturregeleinrichtung 24 auf, die elektrisch mit dem Ventil 30 und der Steuereinheit 27 verbunden ist. Die Temperaturregeleinrichtung 24 misst über den Sensor 25 die Temperatur der im Innenraum 4 enthaltenen Masse und regelt in Abhängigkeit von der festgestellten Temperatur die Wärmeleistung der Heizeinrichtung 31, indem das Ventil 30 geöffnet bzw. geschlossen wird. Weiterhin wird über die Steuereinheit 27 der Motor 21 der Vorrichtung 19 so geregelt, dass in Abhängigkeit von der mittels des Sensors 25 festgestellten Temperatur die Drehzahl der Förderschnecke 22 und somit der Durchfluss des Feststoffs geregelt wird. Wenn also die Temperatur unterhalb eines bestimmten Grenzwerts fällt, wird die Heizleistung der Heizeinrichtung 31 erhöht und die Förderleistung der Förderschnecke 22 reduziert, so dass keine weitere Erhöhung der Viskosität erfolgt und somit die Mischbarkeit und Pumpbarkeit der in dem Wiege- und Mischbehälter 2 enthaltenen Masse erhalten bleibt. Die Vorrichtung 1 wird hier temperaturmäßig so betrieben, dass die Temperatur der Mischung annähernd konstant bei mindestens 70 °C liegt und diese Temperatur auch während des fortgesetzten Mischvorgangs zum Erzeugen der Slurry aufrechterhalten bleibt. Dies wird also einerseits durch die Regelung der Heizeinrichtung 31 als auch andererseits durch die Regelung des Durchsatzes des Trockenstoffs erreicht.

Nachdem die Slurry fertig gemischt wurde, wird das Ventil 7 geöffnet und die Slurry für die gewünschte Weiterverarbeitung durch die Leitung 8 aus dem Innenraum 4 des Wiege- und Mischbehälters 2 abgelassen.

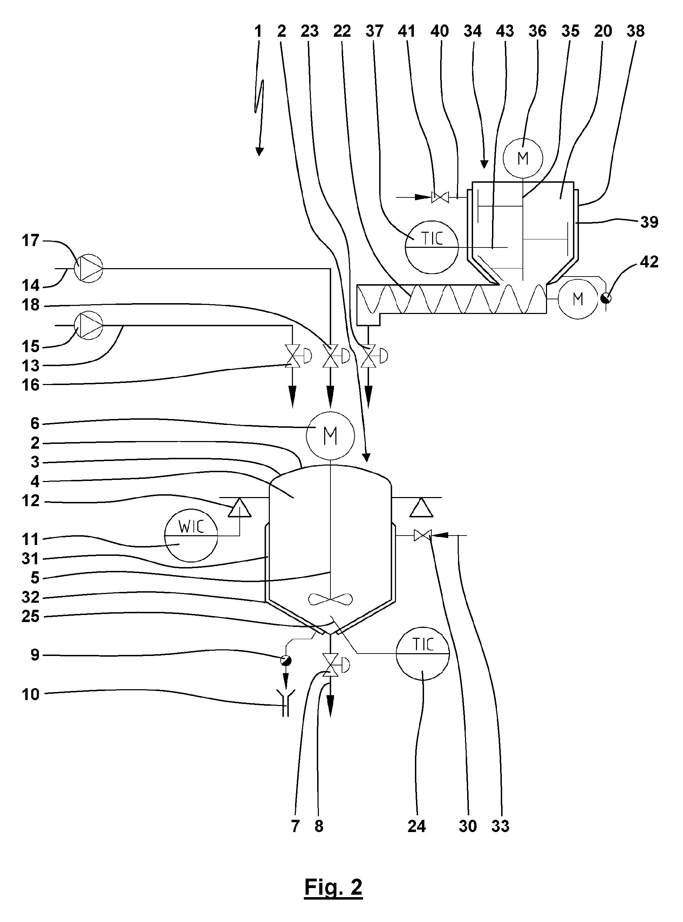

**Fig. 2** zeigt eine zweite beispielhafte Ausführungsform der neuen Vorrichtung 1. Bezüglich der übereinstimmenden Merkmale und deren Funktion wird zwecks Vermeidung von Wiederholungen auf die oberhalb angegebenen Ausführungen verwiesen.

Anstelle der Vorrichtung 19 zum Eindosieren des Feststoffs ist bei dieser Ausführungsform der Vorrichtung 1 eine Vorrichtung 34 vorhanden. Die Vorrichtung 34 weist einen Vorratsbehälter 20 mit einem darin angeordneten Rührwerk 35 auf. Das Rührwerk 35 ist mit einem Motor 36 verbunden und wird über diesen rotierend angetrieben. Die Vorrichtung 34 weist weiterhin eine Temperaturregeleinrichtung 37 und eine Heizeinrichtung 38 auf. Die Heizeinrichtung 38 weist eine Doppelwand 39, eine Leitung 40 und ein Ventil 41 auf. Weiterhin ist ein Kondensatableiter 42 mit der Heizeinrichtung 38 verbunden.

Die Vorrichtung 34 ist somit zum Beheizen des über sie dem Wiege- und Mischbehälter 2 zuzuführenden Trockenstoffs ausgebildet. Hierfür wird Wasserdampf über das Ventil 41 und die Leitung 40 in die Doppelwand 39 der Heizeinrichtung 38 eingebracht und beheizt somit die Vorrichtung 34 und den darin enthaltenen Feststoff. Um eine gleichmäßige Wärmeübertragung und Temperaturverteilung zu erreichen, wird das Rührwerk 35 mittels des Motors 36 rotierend angetrieben. Die Temperaturregeleinrichtung 37 weist einen Sensor 43 auf, der in den Innenraum der Vorrichtung 34 hineinragt und somit die dort vorhandene Temperatur detektiert. Der detektierte Temperaturwert geht in die Temperaturregeleinrichtung 37 ein und dient zur Regelung der Heizleistung der Heizeinrichtung 38, so dass sichergestellt wird, dass der in der Vorrichtung 34 enthaltene Feststoff die gewünschte Temperatur erhält und beibehält.

Vorzugsweise wird daher das Ventil 23 erst dann geöffnet und die Förderschnecke 22 mittels des Motors 21 erst dann rotierend zur Eindosierung des Feststoffs in den Wiege- und Mischbehälter 2 angetrieben, wenn der Feststoff in der Vorrichtung 34 die gewünschte Temperatur besitzt. Da die Temperatur und der Durchfluss des Feststoffs von vornherein so gewählt werden, dass die entstehende Mischung im Wiege- und Mischbehälter 2 die gewünschte Temperatur beibehält, ist die in Fig. 1 gezeigte Regelung des Motors 21 in Abhängigkeit von der Temperaturregeleinrichtung 24 des Wiege- und Mischbehälters 2 nicht erforderlich, könnte jedoch trotzdem zusätzlich vorhanden sein.

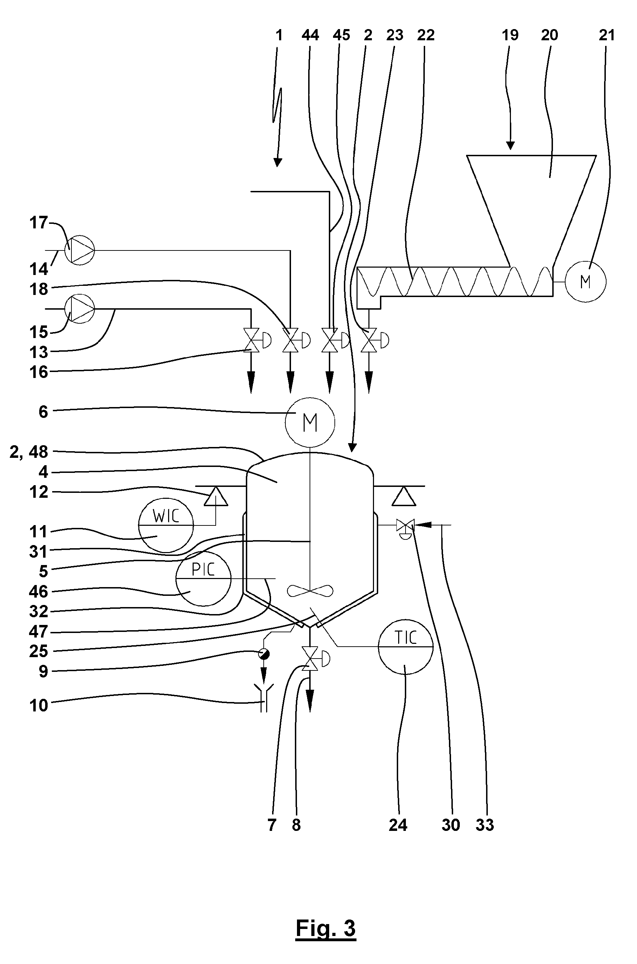

**Fig. 3** zeigt eine dritte beispielhafte Ausführungsform der neuen Vorrichtung 1 zum satzweisen Herstellen einer Slurry und zum Weiterverarbeiten der Slurry. Bezüglich der übereinstimmenden Merkmale und deren Funktion wird zwecks Vermeidung von Wiederholungen auf die oberhalb angegebenen Ausführungen verwiesen.

Im vorliegenden Fall ist neben den Leitungen 13 und 14 zum Zuführen einer ersten und einer zweiten Flüssigkeit noch eine Leitung 44 zum Eindosieren einer dritten Flüssigkeit vorhanden. Bei der dritten Flüssigkeit handelt es sich um einen weiteren Rezepturbestandteil wie z. B. Invertzucker, Sorbitol, usw., welcher über ein Ventil 45 in den Innenraum 4 des Wiege- und Mischbehälters 2 gewichtsgenau eindosiert wird.

Zusätzlich zu der Gewichtsregeleinrichtung 11 und der Temperaturregeleinrichtung 24 weist die Vorrichtung 1 bzw. der Wiege- und Mischbehälter 2 hier eine Druckregeleinrichtung 46 auf. Die Druckregeleinrichtung 46 weist einen Sensor 47 zum Bestimmen des Drucks im Innenraum 4 des Wiege- und Mischbehälters 2 auf. Der Wiege- und Mischbehälter 2 ist hier gleichzeitig als Lösebehälter 48 ausgebildet. Dies bedeutet, dass im Behälter 2, 48 nicht nur die Slurry hergestellt, sondern auch durch Aufbringung eines Überdrucks und entsprechendes Weitermischen und Erwärmung die in der Slurry enthaltenen Feststoffe zur Erzeugung der Lösung gelöst werden. Dieser Vorgang des Lösens der Feststoffe in der Slurry unter Überdruck wird auch als Druckauflösung bezeichnet.

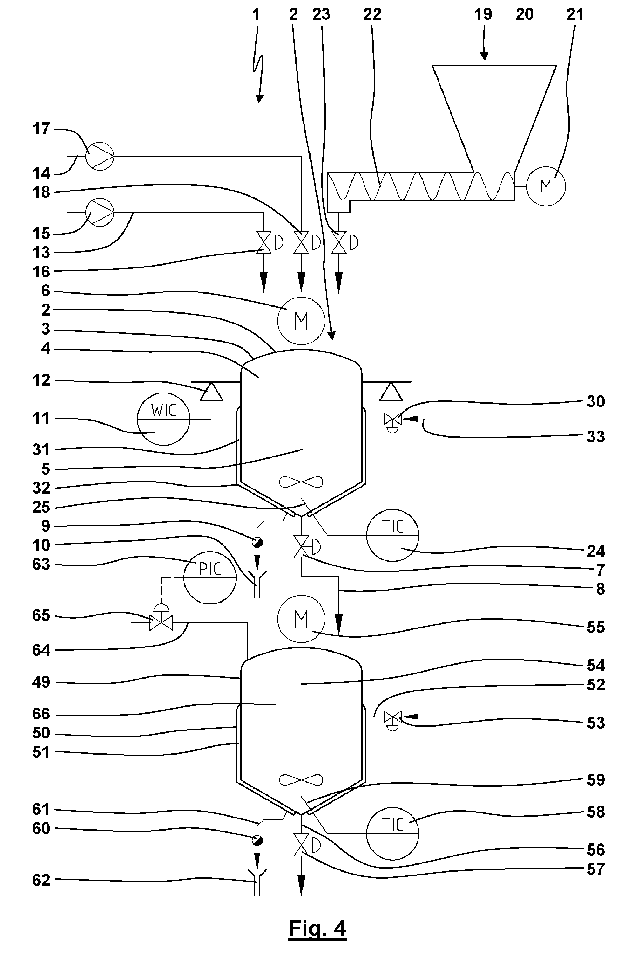

**Fig. 4** zeigt eine vierte beispielhafte Ausführungsform der neuen Vorrichtung 1 zum satzweisen Herstellen einer Slurry und zum Weiterverarbeiten der Slurry. Bezüglich der übereinstimmenden Merkmale und deren Funktion wird zwecks Vermeidung von Wiederholungen auf die oberhalb angegebenen Ausführungen verwiesen.

Die Vorrichtung 1 weist hier im Unterschied zu der Ausführungsform gemäß Fig. 3 einen separaten Lösebehälter 49 auf. Der Lösebehälter 49 weist eine Heizeinrichtung 50 mit einer Doppelwand 51, einer Leitung 52 und einem Ventil 53 auf. Auch diese Heizeinrichtung 50 wird mit Dampf betrieben. Weiterhin weist der Lösebehälter 49 einen Mischer 54 auf, der mit einem Motor 55 verbunden und durch diesen rotierend angetrieben ist. Der Lösebehälter 49 weist weiterhin in seinem unteren Bereich eine Leitung 56 und ein Ventil 57 zum Ablassen der in ihm enthaltenen Masse auf. Weiterhin ist eine Temperaturregeleinrichtung 58 mit einem Sensor 59 vorgesehen. Die Heizeinrichtung 50 weist weiterhin eine Kondensatableiter 60 auf, über den Kondensat durch eine Leitung 61 in eine Drainage 62 abgeführt wird. Weiterhin weist der Lösebehälter 49 eine Druckregeleinrichtung 63 auf. Die Druckregeleinrichtung 63 ist über eine Leitung 64 und ein Ventil 65 mit dem Innenraum 66 des Lösebehälters 49 verbunden und kann so den darin vorhandenen Druck feststellen.

Nachdem die Slurry im Wiege- und Mischbehälter 2 fertig hergestellt und über das geöffnete Ventil 7 und die Leitung 8 in den Innenraum 66 des Lösebehälters 49 abgelassen wurde, findet im Lösebehälter 49 nun die Druckauflösung zur Herstellung einer Lösung aus der Slurry statt. Diese Druckauflösung geschieht unter Beheizung der Slurry bzw. der entstehenden Lösung durch die Heizeinrichtung 50, die durch die Temperaturregeleinrichtung 58 geregelt wird. Während die Mischung durch den Mischer 54 gemischt wird, wird über die Druckregeleinrichtung 63 der im Innenraum 66 der Löseeinrichtung 49 herrschende Überdruck so geregelt, dass die gewünschte Druckauflösung - d. h. das Auflösen der in der Slurry enthaltenen Feststoffe - zum Erreichen der Lösung erzielt wird.

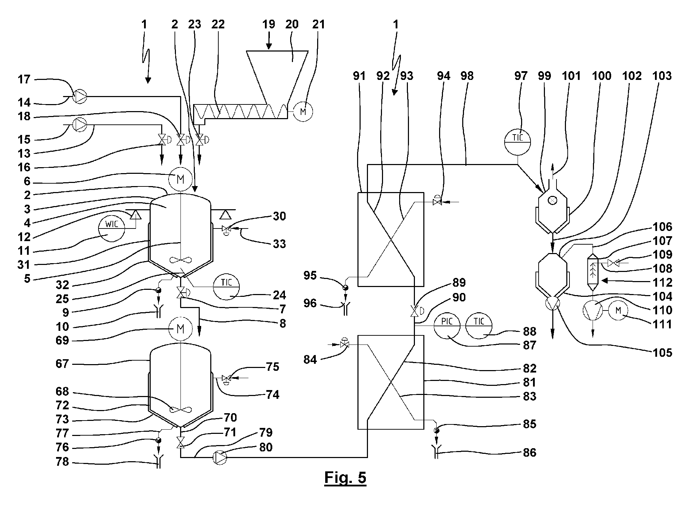

**Fig. 5** zeigt eine fünfte beispielhafte Ausführungsform der neuen Vorrichtung 1 zum satzweisen Herstellen einer Slurry und zum Weiterverarbeiten der Slurry. Bezüglich der übereinstimmenden Merkmale und deren Funktion wird zwecks Vermeidung von Wiederholungen auf die oberhalb angegebenen Ausführungen verwiesen.

Stromabwärts des Wiege- und Mischbehälters 2 ist hier ein Vorratsbehälter 67 vorhanden. Der Vorratsbehälter 67 weist einen Mischer 68 und einen damit verbundenen Motor 69 für den rotierenden Antrieb des Mischers 68 auf. Am unteren Ende des Vorratsbehälters 67 ist eine Leitung 70 mit einem Ventil 71 angeordnet. Der Vorratsbehälter 67 weist weiterhin eine Heizeinrichtung 72 mit einer Doppelwand 73, einer Leitung 74 und einem Ventil 75 auf. Weiterhin ist ein Kondensatableiter 76 über eine Leitung 77 mit der Heizeinrichtung 72 verbunden, so dass kondensierter Wasserdampf der Heizeinrichtung 72 in eine Drainage 78 abgeführt werden kann. Im Anschluss an die Leitung 70 und das Ventil 71 ist eine Leitung 79 mit einer Pumpe 80 angeschlossen.

Über die Leitung 79 und die Pumpe 80 ist der Auslass des Vorratsbehälters 67 mit einem Lösebehälter 81 verbunden. Der Lösebehälter 81 ist als Wärmetauscher ausgebildet und weist eine Leitung 82 auf, durch die die Slurry als Primärmedium durch den Wärmetauscher geführt wird. Weiterhin ist eine Leitung 83 mit einem Ventil 84 vorhanden, über die ein warmes Sekundärmedium - insbesondere Dampf - durch den Wärmetauscher zur Abgabe von Wärmeenergie an das Primärmedium geführt wird. Am Ende der Leitung 83 ist ein Kondensatableiter 85 vorgesehen, über den das dabei entstehende Kondensat in eine Drainage 86 abgeführt wird. Der Lösebehälter 81 weist weiterhin eine Druckregeleinrichtung 87 und eine Temperaturregeleinrichtung 88 auf.

Der Lösebehälter 81 ist über eine Leitung 90 und ein als Druckhalteventil ausgebildetes Ventil 89 mit dem Eingang eines Kochers 91 verbunden. Der Kocher 91 weist eine Leitung 92 bzw. einen Strömungspfad auf, über die die Lösung als Primärmedium durch den als Wärmetauscher ausgebildeten Kocher 91 geführt wird. Der Kocher 91 weist weiterhin eine Leitung 93 mit einem Ventil 94 auf, über die ein Wärmeenergie abgebendes Sekundärmedium - insbesondere Dampf - durch den Kocher 91 geführt wird. Das dabei entstehende Kondensat wird über einen Kondensatableiter 95 in eine Drainage 96 abgeführt.

Über eine Leitung 98 wird die Masse einem Ausdampfbehälter 99 zugeführt. Der Ausdampfbehälter 99 weist eine Heizeinrichtung 100 und eine Temperaturregeleinrichtung 97 auf. Die Heizeinrichtung 100 wird hier mit Wasser betrieben. Die im Ausdampfbehälter 99 entstehenden Brüden 101 werden aus dem Ausdampfbehälter 99 in die Atmosphäre abgegeben.

Mittels einer Leitung 102 ist der Ausdampfbehälter 99 mit einem Vakuumbehälter 103 verbunden. Der Vakuumbehälter 103 weist eine Heizeinrichtung 104 auf, die wiederum vorzugsweise mit Warmwasser betrieben ist. Weiterhin ist eine Pumpe 105 vorgesehen, über die die fertige Masse aus dem Vakuumbehälter 103 ausgepumpt wird. Der Vakuumbehälter 103 ist über eine Leitung 106 mit einem Wasserbehälter 107 verbunden, dem über eine Leitung 108 und ein Ventil 109 Wasser zugeführt wird. Der Wasserbehälter 107 ist mit einem Verdichter 110 verbunden, der über einen Motor 111 angetrieben wird. Die vorgenannten Bauteile bilden gemeinsam eine Vakuumpumpe 112.

Zusätzlich zu dem zuvor beschriebenen Verfahren ist bei dieser Ausführungsform das Folgende charakteristisch:
Der Vorratsbehälter 67 bzw. die Leitung 79 und die Pumpe 80 stellen den Übergang von dem stromaufwärts satzweise betriebenen Verfahren zu dem stromabwärts kontinuierlich betriebenen Verfahren dar. Der einen Puffer bildenden Vorratsbehälter 67 dient also zur Bevorratung einer bestimmten satzweise hergestellten Menge der Slurry, die dann kontinuierlich weiterverarbeitet wird. Nachdem die Slurry in dem Vorratsbehälter 67 weiter temperiert und gemischt wurde, wird sie kontinuierlich dem Lösebehälter 81 zugeführt. Der Lösebehälter 81 ist als Wärmetauscher ausgebildet und regelt den Druck über die Druckregeleinrichtung 87 und die Temperatur über die Temperaturregeleinrichtung 88. Die Slurry wird im Lösebehälter 81 also unter Überdruck und Wärmezufuhr so behandelt, dass die in der Slurry enthaltenen Feststoffe gelöst und somit eine Lösung erzeugt wird.

Nach dieser so genannten Druckauflösung wird die aus der Slurry entstandene Lösung über die Leitung 90 und das geöffnete Ventil 89 dem Kocher 91 zugeführt. In dem als Wärmetauscher ausgebildeten Kocher 91 wird die Lösung als Primärmedium durch die Leitung 92 bzw. einen Strömungspfad geführt und dabei mittels des als Sekundärmedium fungierenden Wasserdampfs, der durch die Leitung 93 geführt wird, gekocht. Hierdurch wird der Flüssigkeits- bzw. Wassergehalt der Lösung weiter reduziert.

Nach dem Fertigkochen wird die Lösung mit dem erhöhten Trockensubstanzanteil - insbesondere einem Trockensubstanzanteil je nach Produkt von etwa zwischen 92 und 99 % - dem Ausdampfbehälter 99 zugeführt. Über die Heizeinrichtung 100 wird die Lösung weiter auf Temperatur gehalten und die ausdampfenden Brüden 101 in die Atmosphäre abgegeben.

Die in ihrem Wassergehalt weiter reduzierte Lösung wird dann durch die Leitung 106 aus dem Ausdampfbehälter 99 in den Vakuumbehälter 103 überführt. Im Vakuumbehälter 103 werden mittels der Vakuumpumpe 112 ein Vakuum erzeugt und weitere Flüssigkeitsbestandteile aus der Lösung abgeführt. Das hierbei noch entstehende Wasser wird entfernt, während die nun hergestellte fertige Lösung einer Weiterverarbeitung zum Herstellen der gewünschten Süßwaren zugeführt wird.

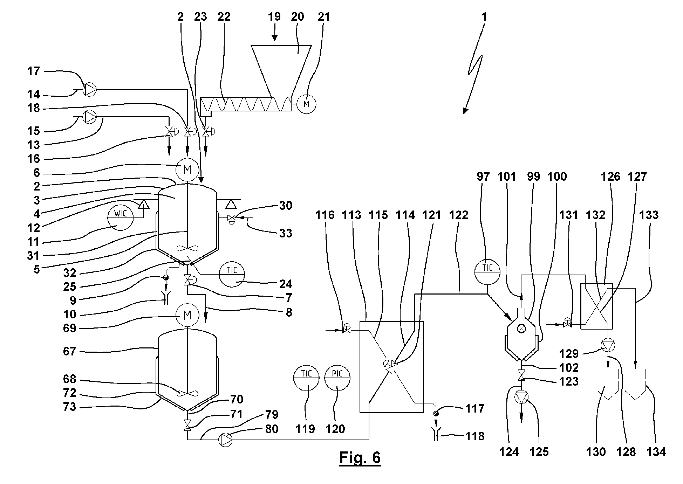

**Fig. 6** zeigt eine sechste beispielhafte Ausführungsform der neuen Vorrichtung 1 zum satzweisen Herstellen einer Slurry und zum Weiterverarbeiten der Slurry. Bezüglich der übereinstimmenden Merkmale und deren Funktion wird zwecks Vermeidung von Wiederholungen auf die oberhalb angegebenen Ausführungen verwiesen.

Im vorliegenden Ausführungsbeispiel ist im Anschluss an die Leitung 79 ein kombinierter Löse- und Kochbehälter 113 angeordnet. Der als Wärmetauscher ausgebildete Löse- und Kochbehälter 113 weist eine Leitung 114 auf, durch die die Slurry als Primärmedium des Wärmetauschers geführt wird. Weiterhin ist eine Leitung 115 mit einem Ventil 116 vorhanden, über die Wasserdampf als Sekundärmedium zur Wärmeübertragung durch den Löse- und Kochbehälter 113 geführt werden, wobei das dabei entstehende Kondensat über den Kondensatableiter 117 in eine Drainage 118 abgeführt wird. Der Löse- und Kochbehälter 113 weist weiterhin eine Temperaturregeleinrichtung 119 und eine Druckregeleinrichtung 120 auf. In der Leitung 114 ist ein einstellbares Ventil 121 angeordnet. Das Ventil 121 trennt den stromaufwärts angeordneten Löseteil vom stromabwärts angeordneten Kochteil des Löse- und Kochbehälters 113.

Über eine Leitung 122 ist der Löse- und Kochbehälter 113 mit dem Ausdampfbehälter 99 verbunden. Der Ausdampfbehälter 99 weist hier im Anschluss an die Leitung 102 noch ein Ventil 123 und eine in der Leitung 124 angeordnete Pumpe 125 zum Abführen der Lösung auf.

Die in dem Ausdampfbehälter 99 entstehenden Brüden 101 werden hier einem Wärmetauscher 126 zugeführt. Der Wärmetauscher 126 weist eine Leitung 127 auf, durch die die Brüden 101 als Primärmedium durch den Wärmetauscher 126 geführt werden. Die dabei kondensierenden Brüden 128 werden durch eine Pumpe 129 dem Behälter 130 zugeführt. Als Sekundärmedium wird vorzugsweise Kaltwasser verwendet, welches durch ein Ventil 131 und die Leitung 132 durch den Wärmetauscher 126 geführt wird. Das Kaltwasser als Sekundärmedium nimmt dabei einen Teil der Wärmeenergie des Primärmediums auf und tritt als erwärmtes Sekundärmedium 133 aus dem Wärmetauscher 126 aus und wird in einem Behälter 134 aufgefangen.

Im vorliegenden Beispiel finden dabei das Druckauflösen und das Kochen in einem kombinierten Löse- und Kochbehälter 113 statt. Der Löse- und Kochbehälter 113 regelt mittels der Temperaturregeleinrichtung 119 die Temperatur und mittels der Druckregeleinrichtung 120 den im Löseteil herrschenden Druck. Der Druckauflöseteil ist dabei durch das einstellbare Ventil 121 vom Kochteil so getrennt, dass der im Löseteil erforderliche Überdruck aufrechterhalten bleibt.

Über die Leitung 122 wird dann die gewonnene Lösung dem Ausdampfbehälter 99 zugeführt, dessen Heizeinrichtung 100 mittels der Temperaturregeleinrichtung 97 geregelt wird. Im unteren Bereich wird die nun fertige Lösung für eine Weiterverarbeitung bzw. den unmittelbaren Einsatz als Süßware aus dem Ausdampfbehälter 99 ausgepumpt.

Die beim Ausdampfen entstehenden Brüden 101 werden hier in vorteilhafter Weise genutzt, um den Energiebedarf des Gesamtsystems weiter zu reduzieren. Im Gegensatz zum Stand der Technik werden die Brüden 101 nicht einfach durch einen Schornstein der Atmosphäre zugeführt, sondern durch einen Wärmetauscher 126 hindurchgeführt, um Ihnen Wärmeenergie zu entziehen und diese geschickt zur Bereitstellung von Warmwasser zu verwenden. Das sich im Wärmetauscher 126 erwärmende Sekundärmedium 133 wird als sauberes Warmwasser z. B. zum Reinigen oder Klarspülen in einer CIP-Anlage (CIP = "Cleaning In Place") benutzt. Die leicht verunreinigten kondensierten Brüden werden z. B. dem Vorreinigungstank der CIP-Anlage und somit ebenfalls einer sinnvollen Verwendung zugeführt.

Aus Gründen der Vereinfachung der Darstellung der Zeichnungen sind die elektrischen Leitungsverbindungen der Gewichtsregeleinrichtungen, Temperaturregeleinrichtungen und Druckregeleinrichtungen nicht genauer dargestellt. Die konkrete Ausgestaltung ist dem Fachmann jedoch bekannt und muss daher nicht im Detail beschrieben werden.

### BEZUGSZEICHENLISTE

- 1: Vorrichtung
- 2: Wiege- und Mischbehälter
- 3: Gehäuse
- 4: Innenraum
- 5: Mischer
- 6: Motor
- 7: Ventil
- 8: Leitung
- 9: Kondensatableiter
- 10: Drainage
- 11: Gewichtsregeleinrichtung
- 12: Aufhängung
- 13: Leitung
- 14: Leitung
- 15: Pumpe
- 16: Ventil
- 17: Pumpe
- 18: Ventil
- 19: Vorrichtung
- 20: Vorratsbehälter
- 21: Motor
- 22: Förderschnecke
- 23: Ventil
- 24: Temperaturregeleinrichtung
- 25: Sensor
- 26: elektrische Leitung
- 27: Steuereinheit
- 28: elektrische Leitung
- 29: elektrische Leitung
- 30: Ventil
- 31: Heizeinrichtung
- 32: Doppelwand
- 33: Leitung
- 34: Vorrichtung
- 35: Rührwerk
- 36: Motor
- 37: Temperaturregeleinrichtung
- 38: Heizeichrichtung
- 39: Doppelwand
- 40: Leitung
- 41: Ventil
- 42: Kondensatableiter
- 43: Sensor
- 44: Leitung
- 45: Ventil
- 46: Druckregeleinrichtung
- 47: Sensor
- 48: Lösebehälter
- 49: Lösebehälter
- 50: Heizeinrichtung
- 51: Doppelwand
- 52: Leitung
- 53: Ventil
- 54: Mischer
- 55: Motor
- 56: Leitung
- 57: Ventil
- 58: Temperaturregeleinrichtung
- 59: Sensor
- 60: Kondensatableiter
- 61: Leitung
- 62: Drainage
- 63: Druckregeleinrichtung
- 64: Leitung
- 65: Ventil
- 66: Innenraum
- 67: Vorratsbehälter
- 68: Mischer
- 69: Motor
- 70: Leitung
- 71: Ventil
- 72: Heizeinrichtung
- 73: Doppelwand
- 74: Leitung
- 75: Ventil
- 76: Kondensatableiter
- 77: Leitung
- 78: Drainage
- 79: Leitung
- 80: Pumpe
- 81: Lösebehälter
- 82: Leitung
- 83: Leitung
- 84: Ventil
- 85: Kondensatableiter
- 86: Drainage
- 87: Druckregeleinrichtung
- 88: Temperaturregeleinrichtung
- 89: Ventil
- 90: Leitung
- 91: Kocher
- 92: Leitung
- 93: Leitung
- 94: Ventil
- 95: Kondensatableiter
- 96: Drainage
- 97: Temperaturregeleinrichtung
- 98: Leitung
- 99: Ausdampfbehälter
- 100: Heizeinrichtung
- 101: Brüden
- 102: Leitung
- 103: Vakuumbehälter
- 104: Heizeinrichtung
- 105: Pumpe
- 106: Leitung
- 107: Wasserbehälter
- 108: Leitung
- 109: Ventil
- 110: Verdichter
- 111: Motor
- 112: Vakuumpumpe
- 113: Löse- und Kochbehälter
- 114: Leitung
- 115: Leitung
- 116: Ventil
- 117: Kondensatableiter
- 118: Drainage
- 119: Temperaturregeleinrichtung
- 120: Druckregeleinrichtung
- 121: Ventil
- 122: Leitung
- 123: Ventil
- 124: Leitung
- 125: Pumpe
- 126: Wärmetauscher
- 127: Leitung
- 128: kondensierte Brüden
- 129: Pumpe
- 130: Behälter
- 131: Ventil
- 132: Leitung
- 133: Erwärmtes Sekundärmedium
- 134: Behälter

## Patentansprüche

1. Verfahren zum satzweisen Herstellen einer Zucker oder einen Zuckerersatzstoff enthaltenden Slurry für Süßwaren, mit den Schritten:
satzweises gewichtsgenaues Eindosieren einer Flüssigkeit in einen Wiege- und Mischbehälter (2);
satzweises gewichtsgenaues Eindosieren von Zucker oder eines Zuckerersatzstoffs als Trockenstoff in den Wiege- und Mischbehälter (2) zum Erzeugen einer Mischung, wobei die Flüssigkeit und der Trockenstoff so eindosiert und die Mischung so gemischt wird, dass eine Slurry mit einem Trockensubstanzanteil von mindestens 85 % entsteht; und
Erwärmen der Mischung durch Beheizen des Wiege- und Mischbehälters (2) während des Eindosierens des Trockenstoffs derart, dass die Slurry in dem Wiege- und Mischbehälter (2) eine Temperatur von mindestens 70 °C besitzt.

2. Verfahren nach Anspruch 1, **dadurch gekennzeichnet, dass** der Trockenstoff mit einem Durchsatz in den Wiege- und Mischbehälter (2) zum Erzeugen der Mischung eindosiert und der Durchsatz des Trockenstoffs so geregelt wird, dass die Temperatur der Mischung annähernd konstant bei mindestens 70 °C liegt.

3. Verfahren nach mindestens einem der vorhergehenden Ansprüche, **dadurch gekennzeichnet, dass** der Trockenstoff vor dem Eindosieren in den Wiege- und Mischbehälter (2) erwärmt wird.

4. Verfahren nach mindestens einem der vorhergehenden Ansprüche, weiterhin **gekennzeichnet durch** die Schritte:
Lösen der in der Slurry vorhandenen Feststoffe zum Erzeugen einer Lösung;
Kochen der Lösung zur Erhöhung des Trockensubstanzanteils unter Abgabe von Brüden (101);
Kondensieren der Brüden (101) als Primärmedium in einem Wärmetauscher (126) unter Erwärmung eines Sekundärmediums; und
Auffangen der kondensierten Brüden (128) und/oder des erwärmten Sekundärmediums (133).

5. Vorrichtung (1) zum satzweisen Herstellen einer Zucker oder einen Zuckerersatzstoff enthaltenden Slurry für Süßwaren, mit:
einem Wiege- und Mischbehälter (2) mit einer Gewichtsregeleinrichtung (11) zum satzweisen gewichtsgenauen Eindosieren einer Flüssigkeit und von Zucker oder eines Zuckerersatzstoffs als Trockenstoff zum Erzeugen einer Mischung, wobei die Gewichtsregeleinrichtung (11) so geregelt ist, dass die Flüssigkeit und der Trockenstoff so eindosiert und die Mischung so gemischt wird, dass eine Slurry mit einem Trockensubstanzanteil von mindestens 85 % entsteht; und
einer an dem Wiege- und Mischbehälter (2) angeordneten Heizeinrichtung (31) mit einer Temperaturregeleinrichtung (24) mit einem Sensor (25) zum Erfassen der Temperatur in dem Wiege- und Mischbehälter (2), die derart zum Erwärmen des Wiege- und Mischbehälters (2) ausgebildet und geregelt ist, dass die Slurry eine Temperatur von mindestens 70 °C besitzt.

6. Vorrichtung (1) nach Anspruch 5, **dadurch gekennzeichnet, dass** die Heizeinrichtung (31) den Wiege- und Mischbehälter (2) während des Eindosierens des Trockenstoffs so beheizt, dass die Temperatur der Mischung annähernd konstant bei mindestens 70 °C liegt.

7. Vorrichtung (1) nach mindestens einem der vorhergehenden Ansprüche, **dadurch gekennzeichnet, dass** der Trockenstoff mit einem Durchsatz in den Wiege- und Mischbehälter (2) zum Erzeugen der Mischung eindosiert wird und die Temperaturregeleinrichtung (24) den Durchsatz des Trockenstoffs so regelt, dass die Temperatur der Mischung annähernd konstant bei mindestens 70 °C liegt.

8. Vorrichtung (1) nach mindestens einem der vorhergehenden Ansprüche, **gekennzeichnet durch** eine zweite Heizeinrichtung (38), die zum Erwärmen des Trockenstoffs vor dem Eindosieren in den Wiege- und Mischbehälter (2) ausgebildet und angeordnet ist.

9. Vorrichtung (1) nach mindestens einem der vorhergehenden Ansprüche, **gekennzeichnet durch**
eine Lösevorrichtung (48, 49, 81, 113) zum Lösen der in der Slurry vorhandenen Feststoffe zum Erzeugen einer Lösung;
einen Kocher (91, 113) zum Kochen der Lösung zur Erhöhung des Trockensubstanzanteils unter Abgabe von Brüden;
einem Wärmetauscher (126) zum Kondensieren der Brüden (101) als Primärmedium unter Erwärmung eines Sekundärmediums; und
einer Vorrichtung (130, 134) zum Auffangen der kondensierten Brüden (128) und/oder des erwärmten Sekundärmediums (133).

10. Verfahren nach mindestens einem der Ansprüche 1 bis 4 oder Vorrichtung (1) nach mindestens einem der Ansprüche 5 bis 9, **dadurch gekennzeichnet, dass** zwei Flüssigkeiten eindosiert werden und es sich dabei insbesondere um Wasser und Glucosesirup handelt.

11. Verfahren nach mindestens einem der Ansprüche 1 bis 4 oder 10 oder Vorrichtung (1) nach mindestens einem der Ansprüche 5 bis 10, **dadurch gekennzeichnet, dass** die Slurry einen Trockensubstanzanteil von mindestens 90 % besitzt.

## Claims

1. A method for batch-wise producing a slurry containing sugar or a sugar substitute, comprising the steps of:
feeding a liquid into a weighing and mixing container (2) in a batch-wise and weight-accurate way;
feeding sugar or a sugar substitute as a dry material into the weighing and mixing container (2) in a batch-wise and weight-accurate way to produce a mixture, the liquid and the dry material being fed and the mixture being mixed such that a slurry having a share of dry substance of at least 85 % is created; and
heating the mixture by heating the weighing and mixing container (2) while feeding the dry substance such that the slurry in the mixing and weighing container (2) has a temperature of at least 70 °C.

2. The method of claim 1, **characterised in that** the dry material is fed with a throughput into the weighing and mixing container (2) to produce the mixture and the throughput of the dry material is controlled such that the mixture has an approximately constant temperature of at least 70 °C.

3. The method of at least one of the preceding claims, **characterised in that** the dry material is heated before being fed into the weighing and mixing container (2).

4. The method of at least one of the preceding claims, further **characterised by** the steps of:
dissolving the solid materials contained in the slurry to produce a solution;
cooking the solution to increase the share of dry substance while releasing exhaust vapours (101);
condensing the exhaust vapours (101) as primary medium in a heat exchanger (126) while a secondary medium is heated; and
collecting the condensed exhaust vapours (128) and/or the heated secondary medium (133).

5. An apparatus (1) for batch-wise producing a slurry containing sugar or a sugar substitute for producing confectionaries, comprising:
a weighing and mixing container (2) including a weight control unit (11) for batch-wise and weight-accurate feeding a liquid and sugar or a sugar substitute as dry material to produce a mixture, the weight control unit (11) being controlled such that the liquid and the dry material are fed and the mixture is mixed such that a slurry having a share of dry substance of at least 85 % is produced; and
a heating unit (31) being arranged at the weighing and mixing container (2) and including a temperature control unit (24) including a sensor (25) for sensing the temperature in the weighing and mixing container (2), the heating unit (31) being designed and controlled to heat the weighing and mixing container (2) such that the slurry has a temperature of at least 70 °C.

6. The apparatus (1) of claim 5, **characterised in that** the heating unit (31) heats the weighing and mixing container (2) while feeding the dry material such that the mixture has an approximately constant temperature of at least 70 °C.

7. The apparatus (1) of at least one of the preceding claims, **characterised in that** the dry material is fed with a throughput into the weighing and mixing container (2) to produce the mixture and the temperature control unit (24) controls the throughput of the dry material such that the mixture has an approximately constant temperature of at least 70 °C.

8. The apparatus (1) of at least one of the preceding claims, further **characterised by** a second heating unit (38) being designed and arranged to heat the dry material before it is fed into the weighing and mixing container (2).

9. The apparatus (1) of at least one of the preceding claims, **characterised by**
a dissolving apparatus (48, 49, 81, 113) for dissolving the solid materials contained in the slurry to produce a solution;
a cooking apparatus (91, 113) for cooking the solution to increase the share of dry substance while releasing exhaust vapours;
a heat exchanger (126) for condensing the exhaust vapours (101) as primary medium while heating a secondary medium; and
an apparatus (130, 134) for collecting the condensed exhaust vapours (128) and/or the heated secondary medium (133).

10. The method of at least one of claims 1 to 4 or the apparatus (1) of at least one of claims 5 to 9, **characterised in that** two liquids are fed and these liquids are especially water and glucose syrup.

11. The method of at least one of claims 1 to 4 or 10 or the apparatus (1) of at least one of claims 5 to 10, **characterised in that** the slurry has a share of dry substance of at least 90 %.

## Revendications

1. Procédé de fabrication par lots d'une suspension, contenant du sucre ou un édulcorant, pour des confiseries, comportant les étapes suivantes:
dosage par lots d'un poids précis d'un liquide dans un récipient de pesage et de mélange (2);
dosage par lots d'un poids précis du sucre ou d'un édulcorant sous forme d'une matière sèche dans le récipient de pesage et de mélange (2) pour produire un mélange, le liquide et la matière sèche étant dosés, et le mélange étant mélangé, de façon à former une suspension ayant une teneur en extrait sec d'au moins 85 %, et
chauffage du mélange par chauffage du récipient de pesage et de mélange (2) pendant le dosage de la matière sèche de telle sorte que la suspension présente dans le récipient de pesage et de mélange (2) une température d'au moins 70 °C.

2. Procédé selon la revendication 1, **caractérisé en ce que** la matière sèche est dosée à un certain débit dans le récipient de pesage et de mélange (2) pour produire le mélange, et le débit de la matière sèche est régulé de telle sorte que la température du mélange soit approximativement constante à au moins 70 °C.

3. Procédé selon au moins l'une des revendications précédentes, **caractérisé en ce que** la matière sèche est chauffée avant dosage dans le récipient de pesage et de mélange (2).

4. Procédé selon au moins l'une des revendications précédentes, **caractérisé en outre par** les étapes suivantes:
dissolution des matières solides présentes dans la suspension, pour produire une solution;
ébullition de la solution, pour élever la teneur en extrait sec, avec évacuation de vapeurs (101);
condensation des vapeurs (101) servant de fluide primaire dans un échangeur de chaleur (126), tout en chauffant un fluide secondaire; et
collecte des vapeurs condensées (128) et/ou du fluide secondaire chauffé (133).

5. Dispositif (1) pour la préparation par lots d'une suspension, contenant du sucre ou un édulcorant, pour des confiseries, comportant:
un récipient de pesage et de mélange (2), comportant un dispositif de régulation du poids (11), pour un dosage par lots d'un poids précis d'un liquide et du sucre ou d'un édulcorant sous forme d'une matière sèche pour produire un mélange, l'unité de régulation du poids (11) étant régulée de telle sorte que le liquide et la matière sèche soient dosés, et que le mélange soit mélangé, de telle sorte qu'il se forme une suspension ayant une teneur en extrait sec d'au moins 85 %; et
un dispositif de chauffage (31), disposé contre le récipient de pesage et de mélange (2), comportant un dispositif (24) de régulation de la température, avec un capteur (25) pour détecter la température dans le récipient de pesage et de mélange (2), qui est configuré et régulé pour le chauffage du récipient de pesage et de mélange (2) de façon que la suspension présente une température d'au moins 70 °C.

6. Dispositif (1) selon la revendication 5, **caractérisé en ce que** le dispositif de chauffage (31) chauffe le récipient de pesage et de mélange (2) pendant le dosage de la matière sèche de telle sorte que la température du mélange soit approximativement constante à au moins 70 °C.

7. Dispositif (1) selon au moins l'une des revendications précédentes, **caractérisé en ce que** la matière sèche est dosée avec un certain débit dans le récipient de pesage et de mélange (2) pour produire le mélange, et le dispositif de régulation de la température (24) régule le débit de la matière sèche, de telle sorte que la température du mélange soit approximativement constante à au moins 70 °C.

8. Dispositif (1) selon au moins l'une des revendications précédentes, **caractérisé par** un deuxième dispositif de chauffage (38), qui est configuré et disposé pour chauffer la matière sèche avant son dosage dans le récipient de pesage et de mélange (2).

9. Dispositif (1) selon au moins l'une des revendications précédentes, **caractérisé par**
un dispositif de dissolution (48, 49, 81, 113) pour dissoudre les matières solides présentes dans la suspension, pour produire une solution;
un bouilleur (91, 113), pour faire bouillir la solution dans le but d'élever la teneur en extrait sec, avec évacuation de vapeurs;
un échangeur de chaleur (126) pour condenser les vapeurs (101) en tant que fluide primaire, avec chauffage d'un fluide secondaire; et
un dispositif (130, 134) pour collecter les vapeurs condensées (128) et/ou le fluide secondaire chauffé (133).

10. Procédé selon au moins l'une des revendications 1 à 4 ou dispositif (1) selon au moins l'une des revendications 5 à 9, **caractérisé en ce que** deux liquides sont dosés, et qu'il s'agit, pour ce qui est d'eux, en particulier d'eau et d'un sirop de glucose.

11. Procédé selon au moins l'une des revendications 1 à 4 ou 10 ou dispositif (1) selon au moins l'une des revendications 5 à 10, **caractérisé en ce que** la suspension présente une teneur en extrait sec d'au moins 90 %.
